# EUROPÄISCHE PATENTSCHRIFT

(11) **EP 1 043 249 B1**
(45) Veröffentlichungstag und Bekanntmachung des Hinweises auf die Patenterteilung: **28.11.2001**
(21) Anmeldenummer: 00105955.9
(22) Anmeldetag: 23.03.2000
(51) Int. Cl.: B65G 27/04

(54) **Schwingförderer und Verfahren zur Förderung von Siliciumbruch**
Vibratory conveyor and method for feeding bulk silicium
Convoyeur vibrant et procédé pour le transport de silicium en vrac

(30) Priorität: 01.04.1999 DE 19914998
(43) Veröffentlichungstag der Anmeldung: 11.10.2000
(73) Patentinhaber: Wacker-Chemie GmbH, 81737 München (DE)
(72) Erfinder: Flottmann, Dirk, Dr., 437936 Singapore (SG); Köppl, Franz, Dr., 84567 Erlbach (DE); Schantz, Matthäus, 84367 Reut (DE); Steudten, Friedrich, 84489 Burghausen (DE)
(74) Vertreter: Rimböck, Karl-Heinz, Dr.

(56) Entgegenhaltungen:
- DE-A- 2 422 821

## Beschreibung

Die Erfindung betrifft ein Verfahren zur Förderung von Siliciumbruch. Die Erfindung betrifft auch einen Schwingförderer.

Silicium hoher Reinheit wird beispielsweise durch chemische Gasphasenabscheidung eines hochreinen Chlorsilangases auf einem aufgeheizten Substrat erzeugt. Das Silicium fällt dabei polykristallin in Form von Stäben an. Ein Großteil des für die Halbleiterindustrie erforderlichen monokristallinen Siliciums wird aus diesen Siliciumstäben mittels dem Czochralski-Tiegelzieh-Verfahren erzeugt.

Bei diesem Verfahren wird ein Schmelztiegel mit Siliciumbruchstücken, nachfolgend als Siliciumbruch bezeichnet, mit typischen Durchmessern zwischen 5 und 150 mm befüllt. Der Siliciumbruch wird aufgeschmolzen, und aus der Schmelze mittels eines Impfkristalls eine monokristalline Siliciumstange gezogen. Den für die Befüllung der Schmelztiegel benötigten Siliciumbruch erhält man durch Brechen der während der Gasphasenabscheidung erzeugten polykristallinen Stäbe. Als Brechwerkzeuge werden beispielsweise aus Metall gefertigte Backen- oder Walzenbrecher, Hämmer oder Meißel verwendet.

Nach dem Brechen der sprödharten Siliciumstäbe lassen sich störende Partikel und Fremdatome auf den scharfkantigen Oberflächen der Bruchstücke nachweisen. Bei den Partikeln handelt es sich in der Regel um Staub, der beim Brechen des Siliciums und beim Transport der Bruchstücke erzeugt wird; die Fremdatome stammen insbesondere von den Brechwerkzeugen.

Diese Kontaminationen müssen vor dem Aufschmelzen des Siliciumbruchs im Schmelztiegel entfernt werden. Vorzugsweise geschieht dies durch eine materialabtragende Ätzbehandlung mit Säuren oder Säuregemischen und anschließendem Spülen mit Wasser.

Die großen spezifischen Oberflächen der scharfkantigen Bruchstücke haben schwerwiegende Nachteile, insbesondere resultiert daraus
- ein hoher Säureverbrauch für materialabtragende Behandlungen,
- eine hohe Säureverschleppung durch den oberflächlich anhaftenden Säurefilm beim Umsetzen des Siliciumbruchs in ein Spülbad mit einer einhergehenden Kontamination des Spülwassers, und
- ein Hinterätzen der Bruchkanten.

Die Aufgabe der Erfindung bestand daher darin, ein Verfahren und eine Vorrichtung zur Verfügung zu stellen, die die oben genannten Nachteile von scharfkantigem Siliciumbruch reduzieren.

Gelöst wird die Aufgabe durch ein Verfahren zur Förderung von Siliciumbruch, das dadurch gekennzeichnet ist, daß der Siliciumbruch über eine aus Reinstsilicium gefertigte Förderfläche eines Schwingförderers geführt wird.

Gelöst wird die Aufgabe auch durch einen Schwingförderer, der dadurch gekennzeichnet ist, daß die Förderfläche aus Reinstsilicium gefertigt ist.

Überraschenderweise zeigte sich, daß der scharfkantige Siliciumbruch verrundet wird, wenn dieser auf der schwingenden Förderfläche eines Schwingförderers gefördert wird. Als besonders vorteilhaft für die vorliegende Erfindung erweist sich, daß dabei die spezifischen Oberflächen der Siliciumbruchstücke reduziert werden und oberflächlich anhaftende Kontaminationen abgeschliffen werden. Erfindungsgemäß wird der Siliciumbruch dabei auf einer aus Reinstsilicium gefertigten Förderfläche, die vorzugsweise planar, trog- oder rohrförmig ausgebildet ist, gefördert. Im Sinne der vorliegenden Erfindung ist unter Reinstsilicium mono- oder polykristallines Silicium mit einem Reinheitsgrad von vorzugsweise > 99,99 % zu verstehen. Idealerweise hat die Förderfläche aus Silicium den gleichen Reinheitsgrad wie der zu fördernde Siliciumbruch.

Die Förderfläche wird durch schnelle Schwingungen mit bevorzugt kleiner Amplitude, insbesondere vor-aufwärts und rück-abwärts bewegt. Der auf der Förderfläche liegende Siliciumbruch wird hierdurch in eine fließende Vorwärtsbewegung versetzt, die von einer Schleif- bis zu einer Wurfbewegung reicht. Alle Seiten eines Siliciumbruchstücks sind dabei abwechselnd der Reinstsiliciumfläche zugewandt. Durch die Schleif- und Wurfbewegung des Siliciumbruchs auf der Reinstsiliciumfläche werden die Kanten gebrochen und oberflächlich anhaftende Kontaminationen abgeschliffen, so daß eine gleichmäßige Verrundung des Bruchs zu beobachten ist. Der anfallende Staub wird zweckmäßigerweise vom Siliciumbruchstückstrom getrennt, beispielsweise durch eine Absaugvorrichtung, bevorzugt entlang des Förderwegs, besonders bevorzugt am Austrag. Durch einen Elektro- oder Permanentmagneten, der beispielsweise am Austrag angebracht ist, werden zudem magnetische Partikel vom Siliciumbruchstückstrom getrennt.

In einer bevorzugten Ausführungsform der vorliegenden Erfindung wird der durch die erste Schwingfördereinheit verrundete Siliciumbruch über eine zweite Schwingfördereinheit geführt. Die Förderfläche der zweiten Schwingfördereinheit weist bevorzugt Burchtrittsöffnungen, wie beispielsweise Spalten oder Löcher auf. Der Siliciumbruch wird dabei auf der Förderfläche, die vorzugsweise planar, trog- oder rohrförmig ausgebildet sein kann und aus Reinstsilicium gefertigt ist, gefördert. Mittels dieser zweiten Schwingfördereinheit wird der verrundete Siliciumbruch weitergehend verrundet. Mit der Verrundung verliert der Siliciumbruch etwa 0,5 Gew.% und die Metallkontamination sinkt von 600 ppb auf 100 ppb. Mittels der Durchtrittsöffnungen wird der Siliciumbruch klassiert und entstaubt.

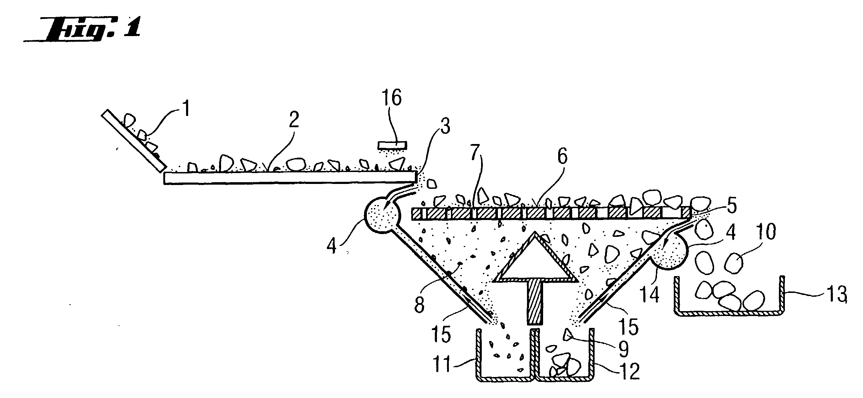

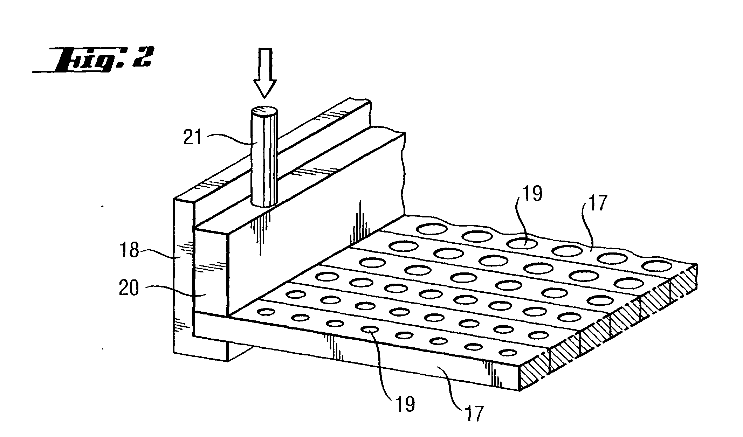

In den Zeichnungen stellt Fig.1 eine schematische Seitenansicht einer erfindungsgemäßen Vorrichtung dar; Fig.2 zeigt eine Förderfläche mit seitlichen Befestigungsvorrichtungen, Förderrändern aus Reinstsilicium und Niederhaltern.

Wie in Fig.1 dargestellt, wird zur Durchführung des erfindungsgemäßen Verfahrens Siliciumbruch (1), mit typischen Durchmessern zwischen 5 und 150 mm, wie dieser beispielsweise in einer Brechanlage erhalten wird, auf die Förderfläche (2) eines erfindungsgemäßen ersten Schwingförderers verbracht. Durch schnelle Schwingungen der Förderfläche mit bevorzugt kleiner Amplitude, wird der Siliciumbruch in Richtung Austrag (3) gefördert. Durch die Wurf- und Schleifbewegung der Siliciumbruchstücke (1) auf der aus Reinstsilicium gefertigten Förderfläche (2), werden die Kanten gebrochen und oberflächlich anhaftende Kontaminationen abgeschliffen. Dieser Abrieb wird, besonders bevorzugt am Austrag (3) durch eine Absaugvorrichtung (4) und durch einen Elektro- oder Permanentmagneten (16) vom verrundeten Siliciumbruch getrennt.

In einer bevorzugten Ausführungsform wird der verrundete Silicimbruch über eine zweite Schwingfördereinheit geführt. Durch schnelle Schwingungen der Förderfläche mit bevorzugt kleiner Amplitude, wird der verrundete Siliciumbruch in Richtung Austrag (5) gefördert. Die aus Reinstsilicium gefertigte Förderfläche (6) weist Durchtrittsöffnungen (7) auf, die bevorzugt in Richtung Austrag (5) an Breite bzw. Durchmesser zunehmen. Die Behandlung der verrundeten Silicimbruchstücke auf der Förderfläche mit Durchtrittsöffnungen ermöglicht eine weitergehende Verrundung, Klassierung und Entstaubung des Siliciumbruchs. Klassiert wird, wie in Fig.1 beispielhaft dargestellt, in drei Klassen, wobei in Abhängigkeit der Größe der Durchtrittsöffnungen (7), beispielsweise zunächst Siliciumbruchstücke mit einem Durchmesser bis zu 25 mm (8), dann Bruchstücke mit Durchmessern von 25 bis 100 mm (9) und schließlich am Austrag der zweiten Schwingfördereinheit weitestgehend verrundete Siliciumburchstücke mit Durchmessern > 100 mm (10) in geeigneten Auffangbehältern (11, 12, 13) gesammelt werden. Durch die Wurf- und Schleifbewegung der Siliciumbruchstücke auf der Förderfläche (6) mit Durchtrittsöffnungen (7) werden die Kanten der Siliciumbruchstücke weitergehend gebrochen und oberflächlich anhaftende Kontaminationen weitergehend abgeschliffen. Dieser Abrieb (14) wird bevorzugt am Austrag (5) und nach dem Klassieren (15) durch beispielsweise eine Absaugvorrichtung (4) von dem verrundeten Siliciumbruch getrennt.

Wie in Fig.2 gezeigt, besteht die Förderfläche der zweiten Schwingfördereinheit bevorzugt aus parallel angeordneten Reinstsiliciumplatten (17), die über seitliche Befestigungsvorrichtungen (18) fixiert sind. Die Reinstsiliciumplatten (17) weisen Durchtrittsöffnungen (19), beispielsweise in Form von Durchbrüchen auf. Die Förderränder (20) sind ebenfalls aus Reinstsiliciumplatten gefertigt und werden durch beispielsweise Niederhalter (21) fixiert. Die Förderränder (20) dienen als seitliche Begrenzung der Förderflächen. Die Siliciumplatten sind bevorzugt zwischen 5 und 10 cm breit, bevorzugt zwischen 1 bis 5 cm hoch und bevorzugt zwischen 60 bis 100 cm lang. Die Durchtrittsöffnungen in der Förderfläche der zweiten Schwingfördereinheit sind bevorzugt Spalten zwischen den parallel angeordneten Siliciumplatten oder zylindrische oder konische Durchbrüche in der Förderfläche, die bevorzugt rund oder eckig sind. Für eine Klassierung wie in Fig.1 gezeigt, nimmt die Breite der Spalten bzw. der Durchmesser der Durchbrüche entlang des Förderweges zu. Zweckmäßigerweise werden die aus Reinstsiliciumplatten gefertigten Förderflächen durch Stahlplatten und gegebenenfalls Dämpfungsmatten gestützt. Voraussetzung für die kontaminationsfreie Verrundung, Klassierung und Entstaubung des Siliciumbruchs nach dem vorgeschilderten Verfahren sind Siliciumoberflächen, bevorzugt Reinstsiliciumoberflächen aller mit dem Siliciumbruch in Berührung kommenden Teile. Insbesondere sind hier die Förderflächen und die seitlichen Förderränder zu nennen.

Die Vorteile des erfindungsgemäßen Verfahrens und der beanspruchten Schwingfördereinheit bestehen in der kontaminationsfreien Förderung, Klassierung und Entstaubung des Siliciumbruchs, wobei überraschenderweise die scharfen Bruchkanten der Siliciumstücke verrundet werden und eine mechanischphysikalische Dekontamination stattfindet.

## Patentansprüche

1. Schwingförderer, **dadurch gekennzeichnet, daß** die Förderfläche (2) aus Reinstsilicium gefertigt ist.

2. Schwingförderer nach Anspruch 1, **dadurch gekennzeichnet, daß** am Austrag eine Vorrichtung (4) zur Entfernung von Staub angebracht ist.

3. Schwingförderer nach Anspruch 1 oder 2, **gekennzeichnet, durch** eine zweite Schwingfördereinheit, deren Förderfläche (6) aus Reinstsilicium gefertigt ist und Durchtrittsöffnungen (7) aufweist.

4. Schwingförderer nach Anspruch 3, **dadurch gekennzeichnet, daß** die Breite bzw. der Durchmesser der Durchtrittsöffnungen (7) in Richtung Austrag zunimmt.

5. Verfahren zur Förderung von Siliciumbruch, **dadurch gekennzeichnet, daß** der Siliciumbruch über die aus Reinstsilicium gefertigte Förderfläche (2) eines Schwingförderers geführt wird.

6. Verfahren zur Klassierung von Siliciumbruch, **dadurch gekennzeichnet, daß** der Siliciumbruch über eine Schwingfördereinheit geführt wird, deren Förderfläche (6) aus Reinstsilicium gefertigt ist und Durchtrittsöffnungen (7) aufweist.

## Claims

1. Vibrating conveyor, **characterized in that** the conveyor surface (2) is made from hyperpure silicon.

2. Vibrating conveyor according to Claim 1, **characterized in that** a dust-removal device (4) is arranged at the dicharge end.

3. Vibrating conveyor according to Claim 1 or 2, **characterized by** a second vibrating conveyor unit, the conveyor surface (6) of which is made from hyperpure silicon and has passage openings (7).

4. Vibrating conveyor according to Claim 3, **characterized in that** the width or the diameter of the passage openings (7) increases in the direction of the discharge end.

5. Method for conveying silicon fragments, **characterized in that** the silicon fragments are guided over the conveyor surface (2), which is made from hyperpure silicon, of a vibrating conveyor.

6. Method for classifying silicon fragments, **characterized in that** the silicon fragments are guided over a vibrating conveyor unit, the conveyor surface (6) of which is made from hyperpure silicon and has passage openings (7).

## Revendications

1. Convoyeur vibrant, **caractérisé en ce que** la surface de transport (2) est constituée de silicium de très haute pureté.

2. Convoyeur vibrant selon la revendication 1, **caractérisé en ce qu'**un dispositif (4) d'élimination des poussières est situé à l'extrémité de décharge.

3. Convoyeur vibrant selon la revendication 1 ou 2, **caractérisé en ce qu'**il comporte une deuxième unité de convoyeur vibrant, dont la surface de transport est constituée de silicium de très haute pureté et comporte des ouverture de passage (7).

4. Convoyeur vibrant selon la revendication 3,
**caractérisé en ce que** la largeur ou le diamètre des ouvertures de passage (7) s'accroît en direction de l'extrémité de décharge.

5. Méthode pour convoyer des fragments de silicium, **caractérisée en ce que** les fragments de silicium sont guidés sur la surface de transport (2), qui est constituée de silicium de très haute pureté, d'un convoyeur vibrant.

6. Méthode pour trier des fragments de silicium, **caractérisée en ce que** les fragments de silicium sont guidés sur une unité de convoyeur vibrant, dont la surface de transport (6) est constituée de silicium de très haute pureté et comporte des ouvertures de passage (7).
